# EUROPEAN PATENT APPLICATION

(11) **EP 4 794 292 A1**
(43) Date of publication of application: **19.08.2026**
(21) Application number: 24881258.8
(22) Date of filing: 02.09.2024
(51) Int. Cl.: H04L 45/00, H04L 12/02

(54) **INFORMATION PROCESSING METHOD AND APPARATUS**

(30) Priority: 26.10.2023 CN 202311401953
(71) Applicant: HUAWEI TECHNOLOGIES CO., LTD., Shenzhen 518129 (CN)
(72) Inventor: ZHAN, Han, Shenzhen, Guangdong 518129 (CN); XI, Xing, Shenzhen, Guangdong 518129 (CN); DONG, Jiajia, Shenzhen, Guangdong 518129 (CN); HU, Zhibo, Shenzhen, Guangdong 518129 (CN); WANG, Shuqiang, Shenzhen, Guangdong 518129 (CN); WANG, Qiang, Shenzhen, Guangdong 518129 (CN)
(74) Representative: Körber, Martin Hans
(86) International application number: PCT/CN2024/116220
(87) International publication number: WO 2025/086891

(57) **Abstract**

Embodiments of this application provide an information processing method. A first network device may receive a first bandwidth value sent by a second network device and receive a second bandwidth value sent by a third network device. The first bandwidth value indicates a bandwidth at which the second network device sends traffic to a destination prefix, and the second bandwidth value indicates a bandwidth at which the third network device sends traffic to the destination prefix. The first network device determines, based on the first bandwidth value and the second bandwidth value, weights, to the second network device and the third network device respectively, for sending traffic destined for the destination prefix. In this way, when forwarding the traffic destined for the destination prefix, the first network device may send the traffic to the second network device and the third network device based on the foregoing weights, so that the traffic actually received by the second network device and the third network device matches bandwidths that can be used by the second network device and the third network device to send traffic to the destination prefix, thereby effectively avoiding packet loss of service traffic.

## Description

This application claims priority to Chinese Patent Application No. 202311401953.4, filed with the China National Intellectual Property Administration on October 26, 2023 and entitled "INFORMATION PROCESSING METHOD AND APPARATUS", which is incorporated herein by reference in its entirety.

### TECHNICAL FIELD

This application relates to the communication field, and in particular, to an information processing method and apparatus.

### BACKGROUND

In communication networks, service traffic may be transmitted to a destination of the service traffic over multiple paths, to properly use network resources and maximally improve quality of service provided for services. For example, in some scenarios, service traffic may be transmitted to a destination of the service traffic over multiple paths that share load with each other.

Although the service traffic is transmitted along multiple paths, the current solution in which network devices forward service traffic still has a problem of severe packet loss of service traffic.

Therefore, there is an urgent need for a solution to resolve the foregoing problem.

### SUMMARY

Embodiments of this application provide an information processing method, to effectively reduce packet loss of service traffic.

Embodiments of this application provide an information processing method, to effectively reduce packet loss of service traffic.

According to a first aspect, an embodiment of this application provides an information processing method. The method may be applied to a first network device. The first network device may receive a first bandwidth value sent by a second network device and receive a second bandwidth value sent by a third network device. Both the second network device and the third network device may send traffic to a destination prefix. The first bandwidth value indicates a bandwidth at which the second network device sends traffic to the destination prefix, and the second bandwidth value indicates a bandwidth at which the third network device sends traffic to the destination prefix. After receiving the first bandwidth value and the second bandwidth value, the first network device may determine, based on the first bandwidth value and the second bandwidth value, weights, to the second network device and the third network device respectively, for sending traffic destined for the destination prefix. In this way, when forwarding the traffic destined for the destination prefix, the first network device may send the traffic to the second network device and the third network device based on the foregoing weight, so that the traffic actually received by the second network device and the third network device matches a bandwidth that can be used by the second network device and the third network device to send traffic to the destination prefix, thereby properly using the bandwidth that is provided by the second network device and the third network device to send traffic to the destination prefix, to avoid a case in which the bandwidth that is provided by the second network device to send traffic to the destination prefix is insufficient to carry the traffic that is destined for the destination prefix and that is received by the second network device, thereby effectively avoiding packet loss of service traffic.

In a possible implementation, the first network device, the second network device, and the third network device all belong to a first network domain, and the second network device and the third network device are boundary devices connected to a second network domain. In this case, the first bandwidth value is a bandwidth corresponding to a cross-domain link connecting the second network device to the second network domain, and the second bandwidth value is a bandwidth corresponding to a cross-domain link connecting the third network device to the second network domain. In this case, the first network device in the first network domain may determine, based on a bandwidth of a cross-domain link between a boundary device in the first network domain and the second network domain, a weight for sending, to the boundary device, traffic destined for the destination prefix.

In a possible implementation, the first network device sends, to the third network device via a fourth network device, the traffic destined for the destination prefix, and the first network device and the fourth network device are equal-cost load sharing devices of each other. In this case, the first network device may send some traffic to the fourth network device that is an equal-cost load sharing device of the first network device, to avoid packet loss of service traffic.

In a possible implementation, if the first network device and the fourth network device are load sharing devices of each other, in a possible implementation, the first network device may determine that the weight for sending, to the second network device, the traffic destined for the destination prefix is $2 * \frac{m}{m + n}$; and determine that the weight for sending, to the third network device, the traffic destined for the destination prefix is: $\frac{n - m}{m + n}$, where it is determined that m is the first bandwidth value, and n is the second bandwidth value. In this manner, the first bandwidth value that can be used by the second network device to send traffic can match the traffic received by the second network device, and the second bandwidth value that can be used by the third network device to send traffic can match the traffic received by the third network device, thereby effectively avoiding packet loss of service traffic.

In a possible implementation, considering that a bandwidth of a link between the first network device and the fourth network device is limited, when the weight for sending the traffic to the third network device is determined, the bandwidth of the link between the first network device and the fourth network device may be further considered, to avoid packet loss when traffic is transmitted between the first network device and the fourth network device because traffic is flooded to the fourth network device. In a specific example, assuming that the bandwidth of the link between the first network device and the fourth network device is j, and a bandwidth of a link between the first network device and the second network device is k, if $\frac{n - m}{n + m} \leq \frac{j}{k}$, it indicates that a weight for offloading traffic to the fourth network device is proper. Therefore, it may be determined that the weight for sending the traffic to the third network device is $\frac{n - m}{n + m}$*,* and it is determined that the weight for sending the traffic to the second network device is $\frac{2 m}{n + m}$. If $\frac{n - m}{n + m} > \frac{j}{k}$ , it indicates that the weight for offloading traffic to the fourth network device is excessively large. Therefore, it may be determined that the weight for sending the traffic to the third network device is $\frac{j}{k}$, and it is determined that the weight for sending the traffic to the second network device is $1 - \frac{j}{k}$.

In a possible implementation, before determining the weights, to the second network device and the third network device respectively, the traffic destined for the destination prefix, the first network device may further determine whether a first traffic optimization condition is met, and when the first traffic optimization condition is met, determine the weights, to the second network device and the third network device respectively, the traffic destined for the destination prefix. The first traffic optimization condition is a condition in which severe packet loss of traffic occurs if equal-cost load sharing continues to be used. In an example, when the first bandwidth value is less than the second bandwidth value, the first bandwidth value is not 0, and a difference between the first bandwidth value and the second bandwidth value is relatively large, continuing to use the conventional equal-cost load sharing scheme causes severe packet loss. Therefore, in an example, the first traffic optimization condition may be: The first bandwidth value is less than the second bandwidth value, the first bandwidth value is not 0, and a difference between the first bandwidth value and the second bandwidth value is greater than or equal to a first bandwidth threshold. In other words, when determining that the first bandwidth value is less than the second bandwidth value, the first bandwidth value is not 0, and the difference between the first bandwidth value and the second bandwidth value is greater than or equal to the first bandwidth threshold, the first network device may determine the weights, to the second network device and the third network device respectively, the traffic destined for the destination prefix.

In a possible implementation, after determining the weights, to the second network device and the third network device respectively, the traffic destined for the destination prefix, the first network device may further store, in a forwarding entry, the weights, to the second network device and the third network device respectively, the traffic destined for the destination prefix, so that at a traffic forwarding stage, the weight for sending the traffic to the second network device and the third network device is determined based on the forwarding entry, thereby forwarding the received traffic based on the weight.

In a possible implementation, in addition to receiving the first bandwidth value and the second bandwidth value, the first network device may further receive a third bandwidth value sent by a fifth network device and a fourth bandwidth value sent by a sixth network device. The third bandwidth value indicates a bandwidth at which the fifth network device sends traffic to the destination prefix, and the fourth bandwidth value indicates a bandwidth at which the sixth network device sends traffic to the destination prefix. Both the fifth network device and the second network device are connected to the first network device, and the fifth network device and the second network device are load sharing devices of each other. In other words, traffic received by the first network device may be load-shared to the second network device and the fifth network device for forwarding. Both the third network device and the sixth network device are connected to the fourth network device, and the third network device and the sixth network device may be load sharing devices of each other. In other words, traffic received by the fourth network device may be load-shared to the third network device and the sixth network device for forwarding. Correspondingly, the first network device may determine, based on the first bandwidth value, the second bandwidth value, the third bandwidth value, and the fourth bandwidth value, weights for sending, to the second network device, the fifth network device, and the fourth network device respectively, the traffic destined for the destination prefix. To be specific, traffic that is originally load-shared by the second network device and the fifth network device is load-shared by the second network device, the fifth network device, and the fourth network device, to reduce traffic received by the second network device. Correspondingly, a case in which severe packet loss of traffic occurs because a bandwidth value provided by the second network device is insufficient to carry the traffic received by the second network device is avoided.

In a possible implementation, before determining the weights for sending, to the second network device, the fifth network device, and the fourth network device respectively, the traffic destined for the destination prefix, the first network device may further determine whether a second traffic optimization condition is met, and when the second traffic optimization condition is met, the first network device determines weights for sending, to the second network device, the fifth network device, and the fourth network device respectively, the traffic destined for the destination prefix. The second traffic optimization condition is a condition in which severe packet loss of traffic occurs if equal-cost load sharing continues to be used. In an example, when a first total bandwidth provided by the first network device is less than a second total bandwidth provided by the fourth network device, the first total bandwidth is not equal to 0, and a difference between the first total bandwidth and the second total bandwidth is greater than or equal to a second bandwidth threshold, continuing to use the conventional equal-cost load sharing scheme causes severe packet loss. The first total bandwidth is a sum of the first bandwidth value and the third bandwidth value, and the second total bandwidth is a sum of the second bandwidth value and the fourth bandwidth value. Therefore, in an example, the second traffic optimization condition may be: The first total bandwidth provided by the first network device is less than the second total bandwidth provided by the fourth network device, the first total bandwidth is not equal to 0, and a difference between the first total bandwidth and the second total bandwidth is greater than or equal to the second bandwidth threshold. In other words, when determining that the first total bandwidth provided by the first network device is less than the second total bandwidth provided by the fourth network device, the first total bandwidth is not equal to 0, and the difference between the first total bandwidth and the second total bandwidth is greater than or equal to the second bandwidth threshold, the first network device may determine weights for sending, to the second network device, the fifth network device, and the fourth network device respectively, the traffic destined for the destination prefix.

In a possible implementation, the first network device may determine that the weight for sending, to the fourth network device, the traffic destined for the destination prefix is $\frac{b + d - a - c}{a + b + c + d}$; determine that the weight for sending, to the second network device, the traffic destined for the destination prefix is $\frac{2 ∗ \left(a+c\right)}{a + b + c + d} ∗ \frac{a}{a + c}$; and determine that the weight for sending, to the fifth network device, the traffic destined for the destination prefix is: $\frac{2 ∗ \left(a+c\right)}{a + b + c + d} ∗ \frac{c}{a + c}$, where a is the first bandwidth value, b is the second bandwidth value, c is the third bandwidth value, and d is the fourth bandwidth value In this manner, the first bandwidth value that can be used by the second network device to send traffic can match the traffic received by the second network device, the third bandwidth value that can be used by the fifth network device to send traffic can match the traffic received by the fifth network device, and the second total bandwidth that can be used by the fourth network device to send traffic can match the traffic received by the fourth network device, thereby effectively avoiding packet loss of service traffic.

In a possible implementation, considering that a bandwidth of a link between the first network device and the fourth network device is limited, when the weight for sending the traffic to the fourth network device is determined, the bandwidth of the link between the first network device and the fourth network device may be further considered, to avoid packet loss when traffic is transmitted between the first network device and the fourth network device because traffic is flooded to the fourth network device. In a specific example, assuming that the bandwidth of the link between the first network device and the fourth network device is e, and a bandwidth of a link between the first network device and the second network device is f, if $\frac{b + d - a - c}{a + b + c + d} \leq \frac{e}{f}$, it indicates that a weight for offloading traffic to the fourth network device is proper. Therefore, it may be determined that the weight for sending the traffic to the fourth network device is $\frac{b + d - a - c}{a + b + c + d}$, it is determined that the weight for sending the traffic to the second network device is $\frac{2 ∗ \left(a+c\right)}{a + b + c + d} ∗ \frac{a}{a + c}$, and it is determined that the weight for sending the traffic to the fifth network device is $\frac{2 ∗ \left(a+c\right)}{a + b + c + d} ∗ \frac{c}{a + c}$ . If $\frac{b + d - a - c}{a + b + c + d} > \frac{e}{f}$, it indicates that the weight for offloading traffic to the fourth network device is excessively large. Therefore, it may be determined that the weight for sending the traffic to the fourth network device is $\frac{e}{f}$, it is determined that the weight for sending, to the second network device, the traffic destined for the destination prefix is $\left(1-\frac{e}{f}\right) ∗ \frac{a}{a + c}$, and it is determined that the weight for sending, to the fifth network device, the traffic destined for the destination prefix is $\left(1-\frac{e}{f}\right) ∗ \frac{c}{a + c}$.

In a possible implementation, the second network device and the third network device are separately connected to the first network device. In addition, the first network device may be further connected to a seventh network device. The second network device, the third network device, and the seventh network device may be load sharing devices of each other. The traffic received by the first network device may be load-shared to three network devices: the second network device, the third network device, and the seventh network device for forwarding. In this case, the first network device may further receive a fifth bandwidth value sent by the seventh network device, where the fifth bandwidth value indicates a bandwidth at which the seventh network device sends traffic to the destination prefix. Correspondingly, weights for sending, to the second network device, the third network device, and the seventh network device respectively, the traffic destined for the destination prefix are determined based on the first bandwidth value, the second bandwidth value, and the fifth bandwidth value. To be specific, when the traffic received by the first network device may be load-shared to three network devices (the second network device, the third network device, and the seventh network device) for forwarding, weights of traffic sent to the three network devices may be determined based on bandwidth values provided by the three network devices, so that bandwidths actually provided by the three network devices match traffic actually carried by the three network devices, thereby avoiding packet loss of traffic.

In a possible implementation, a sum of the first bandwidth value, the second bandwidth value, and the fifth bandwidth value is referred to as a third total bandwidth. To enable the bandwidths actually provided by the foregoing three network devices to match the traffic actually carried by the three network devices, it may be determined that the weight for sending, to the second network device, the traffic destined for the destination prefix is a ratio of the first bandwidth value to the third total bandwidth, it is determined that the weight for sending, to the third network device, the traffic destined for the destination prefix is a ratio of the second bandwidth value to the third total bandwidth, and it is determined that the weight for sending, to the seventh network device, the traffic destined for the destination prefix is a ratio of the fifth bandwidth value to the third total bandwidth.

In a possible implementation, in a specific implementation in which the first network device receives the first bandwidth value sent by the second network device, the first network device may receive an intermediate system to intermediate system (intermediate system to intermediate system, IS-IS) packet advertised by the second network device, where the IS-IS packet includes the first bandwidth value.

In a possible implementation, the IS-IS packet may include a prefix type length value (type length value, TLV), the prefix TLV includes a first sub-TLV, and the first sub-TLV includes the first bandwidth value. In other words, the prefix TLV of the IS-IS packet may be extended, and the first sub-TLV is extended to carry the first bandwidth value.

In a possible implementation, in a specific implementation in which the first network device receives the first bandwidth value sent by the second network device, the first network device may receive an open shortest path first (open shortest path first, OSPF) packet advertised by the second network device, where the OSPF packet includes the first bandwidth value.

In a possible implementation, the OSPF packet includes a prefix TLV, the prefix TLV includes a second sub-TLV, and the second sub-TLV includes the first bandwidth value. In other words, the prefix TLV of the OSPF packet may be extended, and the second sub-TLV is extended to carry the first bandwidth value.

According to a second aspect, an embodiment of this application provides an information processing apparatus, used in a first network device, where the apparatus includes: a receiving unit, configured to: receive a first bandwidth value sent by a second network device, where the first bandwidth value indicates a bandwidth at which the second network device sends traffic to a destination prefix; and receive a second bandwidth value sent by a third network device, where the second bandwidth value indicates a bandwidth at which the third network device sends traffic to the destination prefix; and a processing unit, configured to determine, based on the first bandwidth value and the second bandwidth value, weights, to the second network device and the third network device respectively, for sending traffic destined for the destination prefix.

In a possible implementation, the first network device, the second network device, and the third network device all belong to a first network domain, and the second network device and the third network device are boundary devices connected to a second network domain.

In a possible implementation, the first network device sends, to the third network device via a fourth network device, the traffic destined for the destination prefix, and the first network device and the fourth network device are equal-cost load sharing devices of each other.

In a possible implementation, the processing unit is configured to: determine that the weight for sending, to the second network device, the traffic destined for the destination prefix is: $2 * \frac{m}{m + n}$; and determine that the weight for sending, to the third network device, the traffic destined for the destination prefix is: $\frac{n - m}{m + n}$, where it is determined that m is the first bandwidth value, and n is the second bandwidth value.

In a possible implementation, the processing unit is configured to: determine that the weight for sending, to the second network device, the traffic destined for the destination prefix is: $1 - \frac{j}{k}$; and determine that the weight for sending, to the third network device, the traffic destined for the destination prefix, is $\frac{j}{k}$, where k is a bandwidth of a link between the first network device and the second network device, and j is a bandwidth of a link between the first network device and the fourth network device.

In a possible implementation, the processing unit is further configured to: before determining the weights, to the second network device and the third network device respectively, the traffic destined for the destination prefix, determine that the first bandwidth value is less than the second bandwidth value, the first bandwidth value is not 0, and a difference between the first bandwidth value and the second bandwidth value is greater than or equal to a first bandwidth threshold.

In a possible implementation, the receiving unit is further configured to: receive a third bandwidth value sent by a fifth network device, where the third bandwidth value indicates a bandwidth at which the fifth network device sends traffic to the destination prefix; and receive a fourth bandwidth value sent by a sixth network device, where the fourth bandwidth value indicates a bandwidth at which the sixth network device sends traffic to the destination prefix; and the processing unit is configured to: determine, based on the first bandwidth value, the second bandwidth value, the third bandwidth value, and the fourth bandwidth value, weights for sending, to the second network device, the fifth network device, and the fourth network device respectively, the traffic destined for the destination prefix, where the second network device and the fifth network device are separately connected to the first network device, the third network device and the sixth network device are separately connected to the fourth network device, and the traffic that is destined for the destination prefix and that is received by the fourth network device is forwarded via the third network device and the sixth network device.

In a possible implementation, the processing unit is further configured to: before determining the weights for sending, to the second network device, the fifth network device, and the fourth network device respectively, the traffic destined for the destination prefix, determine that a first total bandwidth provided by the first network device is less than a second total bandwidth provided by the fourth network device, the first total bandwidth is not equal to 0, and a difference between the first total bandwidth and the second total bandwidth is greater than or equal to a second bandwidth threshold, where the first total bandwidth is a sum of the first bandwidth value and the third bandwidth value, and the second total bandwidth is a sum of the second bandwidth value and the fourth bandwidth value.

In a possible implementation, the processing unit is configured to: determine that the weight for sending, to the fourth network device, the traffic destined for the destination prefix is $\frac{b + d - a - c}{a + b + c + d}$; determine that the weight for sending, to the second network device, the traffic destined for the destination prefix is $\frac{2 ∗ \left(a+c\right)}{a + b + c + d} ∗ \frac{a}{a + c}$; and determine that the weight for sending, to the fifth network device, the traffic destined for the destination prefix is: $\frac{2 ∗ \left(a+c\right)}{a + b + c + d} ∗ \frac{c}{a + c}$, where a is the first bandwidth value, b is the second bandwidth value, c is the third bandwidth value, and d is the fourth bandwidth value.

In a possible implementation, the processing unit is configured to: determine that the weight for sending, to the fourth network device, the traffic destined for the destination prefix is: $\frac{e}{f}$; determine that the weight for sending, to the second network device, the traffic destined for the destination prefix is: $\left(1-\frac{e}{f}\right) ∗ \frac{a}{a + c}$; and determine that the weight for sending, to the fifth network device, the traffic destined for the destination prefix is: $\left(1-\frac{e}{f}\right) ∗ \frac{c}{a + c}$, where f is a sum of a bandwidth of a link between the first network device and the second network device and a bandwidth of a link between the first network device and the fifth network device, and e is a bandwidth of a link between the first network device and the fourth network device.

In a possible implementation, the second network device and the third network device are separately connected to the first network device, and the first network device is further connected to a seventh network device. The receiving unit is further configured to: receive a fifth bandwidth value sent by the seventh network device, where the fifth bandwidth value indicates a bandwidth at which the seventh network device sends traffic to the destination prefix; and the processing unit is configured to determine, based on the first bandwidth value, the second bandwidth value, and the fifth bandwidth value, weights for sending, to the second network device, the third network device, and the seventh network device respectively, the traffic destined for the destination prefix.

In a possible implementation, the processing unit is configured to: determine that the weight for sending, to the second network device, the traffic destined for the destination prefix is: a ratio of the first bandwidth value to a third total bandwidth, where the third total bandwidth is a sum of the first bandwidth value, the second bandwidth value, and the fifth bandwidth value; determine that the weight for sending, to the third network device, the traffic destined for the destination prefix is: a ratio of the second bandwidth value to the third total bandwidth; and determine that the weight for sending, to the seventh network device, the traffic destined for the destination prefix is: a ratio of the fifth bandwidth value to the third total bandwidth.

In a possible implementation, the receiving unit is configured to receive an intermediate system to intermediate system IS-IS packet advertised by the second network device, where the IS-IS packet includes the first bandwidth value.

In a possible implementation, the IS-IS packet includes a prefix type length value TLV, the prefix TLV includes a first sub-TLV, and the first sub-TLV includes the first bandwidth value.

In a possible implementation, the receiving unit is configured to receive an open shortest path first OSPF packet advertised by the second network device, where the OSPF packet includes the first bandwidth value.

In a possible implementation, the OSPF packet includes a prefix type length value TLV, the prefix TLV includes a second sub-TLV, and the second sub-TLV includes the first bandwidth value.

In a possible implementation, the processing unit is further configured to store, in a forwarding entry, the weights, to the second network device and the third network device respectively, the traffic destined for the destination prefix.

According to a third aspect, an embodiment of this application provides a device. The device includes a processor and a memory. The memory is configured to store instructions or a computer program. The processor is configured to execute the instructions or the computer program in the memory, to perform the method in any one of the implementations of the first aspect.

According to a fourth aspect, an embodiment of this application provides a computer-readable storage medium, including instructions or a computer program. When the instructions or the computer program is run on a computer, the computer is caused to perform the method in any one of the implementations of the first aspect.

According to a fifth aspect, an embodiment of this application provides a computer program product including instructions or a computer program. When the computer program product is run on a computer, the computer is caused to perform the method in any one of the implementations of the first aspect.

### BRIEF DESCRIPTION OF DRAWINGS

To describe the technical solutions in embodiments of this application or the prior art more clearly, the following briefly describes the accompanying drawings for describing embodiments or the prior art. It is clear that, the accompanying drawings in the following descriptions show only some embodiments recorded in this application, and a person of ordinary skill in the art may still derive other drawings from these accompanying drawings without creative efforts.
FIG. 1a is a diagram of an example application scenario according to an embodiment of this application;
FIG. 1b is a diagram of another example application scenario according to an embodiment of this application;
FIG. 1c is a diagram of another example application scenario according to an embodiment of this application;
FIG. 1d is a diagram of still another example application scenario according to an embodiment of this application;
FIG. 2 is a schematic flowchart of an information processing method according to an embodiment of this application;
FIG. 3 is a diagram of a structure of a sub-TLV according to an embodiment of this application;
FIG. 4a is a diagram of an example application scenario according to an embodiment of this application;
FIG. 4b is a diagram of another example application scenario according to an embodiment of this application;
FIG. 4c is a diagram of another example application scenario according to an embodiment of this application;
FIG. 5 is a diagram of a structure of an information processing apparatus according to an embodiment of this application; and
FIG. 6 is a diagram of a structure of a device according to an embodiment of this application.

### DESCRIPTION OF EMBODIMENTS

Embodiments of this application provide an information processing method, to effectively reduce packet loss of service traffic.

Currently, although service traffic is transmitted along multiple paths, current solutions in which network devices forward service traffic still have a problem of severe packet loss of service traffic. The following describes specific scenarios in which packet loss of service traffic is serious.

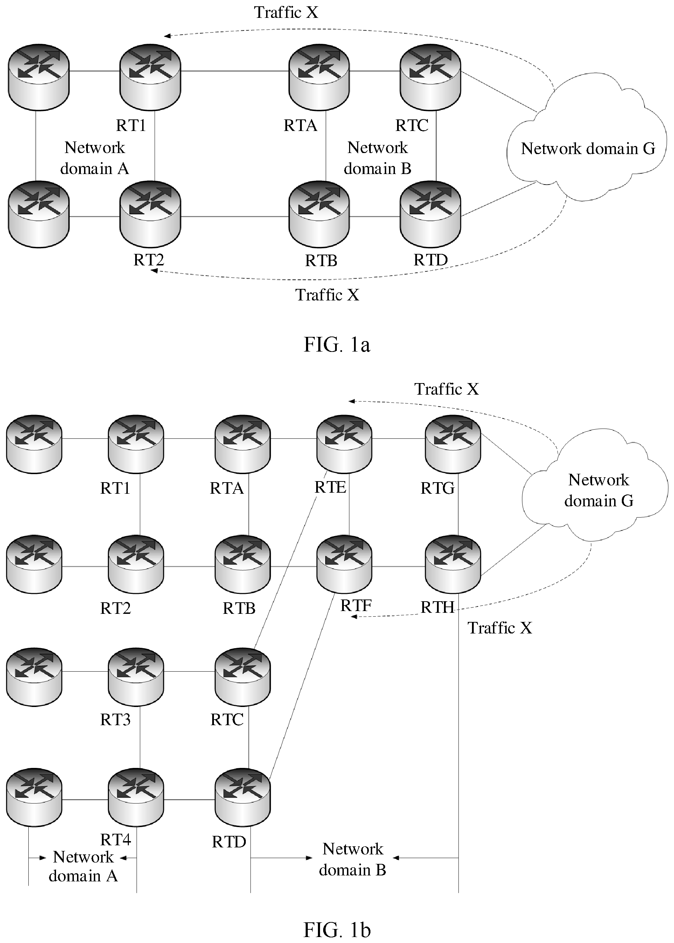

FIG. 1a is a diagram of an example application scenario according to an embodiment of this application. As shown in FIG. 1a:
an RT1 and an RT2 are boundary devices in a network domain A for connecting to a network domain B, an RTA and an RTB are boundary devices in the network domain B for connecting to the network domain A, the RT1 is connected to the RTA, and the RT2 is connected to the RTB. In addition to the RTA and the RTB, the network domain B further includes an RTC and an RTD, where the RTC and the RTD are boundary devices in the network domain B for connecting to a network domain G.

A connection relationship between network devices in the network domain B is not described in detail herein.

In an example, the RT1 and the RT2 may advertise routes with a same destination prefix. For example, the RT1 and the RT2 may advertise routes including a same virtual next hop destination prefix by using a virtual next hop technology. As a specific example, an external border gateway protocol (External Border Gateway Protocol, EBGP) neighbor may be established between the RT1 and the RTA based on a loopback (loopback) interface address, the RT1 advertises a route to the RTA, an EBGP neighbor may be established between the RT2 and the RTB based on a loopback interface address, and the RT2 advertises a route to the RTB. In addition, the route advertised by the RT1 to the RTA and the route advertised by the RT2 to the RTB may include a same destination prefix.

Correspondingly, at a traffic forwarding stage, service traffic destined for the destination prefix may be sent to the RT1 through the RTA, and the RT1 forwards the service traffic to the destination of the service traffic. The service traffic destined for the destination prefix may alternatively be sent to the RT2 through the RTB, and the RT2 forwards the service traffic to the destination of the service traffic.

In a specific example, a network device in the network domain G may send the service traffic destined for the destination prefix to the destination of the service traffic through the network domain B and the network domain A. There may be two transmission paths of the service traffic in the network domain B and the network domain A, which are respectively: RTC-RTA-RT1 and RTD-RTB-RT2. In an example, the foregoing two paths may be equal-cost load sharing paths. To be specific, as shown in FIG. 1a, traffic carried on the two paths represented by dashed lines is the same, and is both X. In other words, a link RTA-RT1 and a link RTB-RT2 share service traffic of a same bandwidth. In this case, the RTC and the RTD are equal-cost load sharing devices of each other, and the RTA and the RTB are also equal-cost load sharing devices of each other. In a normal case, the link RTA-RT1 and the link RTB-RT2 can provide a same bandwidth for forwarding the service traffic.

However, if some links in the link RTA-RT1 are faulty, for example, four of five 100G links are disconnected, in this case, because the EBGP neighbor between the RTA and the RT1 is not disconnected, a route advertisement process between the RT1 and the RTA is the same as a route advertisement process before some links in the link RTA-RT1 are faulty. Correspondingly, the transmission paths of the service traffic in the network domain B and the network domain A may still include two paths: RTC-RTA-RT1 and RTD-RTB-RT2. Similarly, at the forwarding stage of the service traffic, the service traffic destined for the destination prefix is evenly distributed to the two paths RTC-RTA-RT1 and RTD-RTB-RT2 for forwarding. However, because some links in the link RTA-RT1 are faulty, the bandwidth actually provided by the link RTA-RT1 for forwarding the service traffic is insufficient to carry the service traffic received by the link RTA-RT1. Consequently, the traffic on the link RTA-RT1 is congested, causing severe packet loss of the service traffic.

FIG. 1b is a diagram of another example application scenario according to an embodiment of this application. As shown in FIG. 1b:
an RT1, an RT2, an RT3, and an RT4 are boundary devices used by a network domain A to connect to a network domain B, an RTA, an RTB, an RTC, and an RTD are boundary devices used by the network domain B to connect to the network domain A, the RT1 is connected to the RTA, the RT2 is connected to the RTB, the RT3 is connected to the RTC, and the RT4 is connected to the RTD. In addition to the RTA, the RTB, the RTC, and the RTD, the network domain B further includes an RTE, an RTF, an RTG, and an RTH, where the RTG and the RTH are boundary devices used by the network domain B to connect to a network domain G.

A connection relationship between network devices in the network domain B is not described in detail herein.

In an example, the RT1, the RT2, the RT3, and the RT4 may advertise routes with a same destination prefix. For example, the RT1, the RT2, the RT3, and the RT4 may advertise routes including a same virtual next hop destination prefix by using a virtual next hop technology. Specifically, the RT1 advertises a route including a particular destination prefix to the RTA, the RT2 advertises a route including the destination prefix to the RTB, the RT3 advertises a route including the destination prefix to the RTC, and the RT4 advertises a route including the destination prefix to the RTD. A manner in which the RT1 advertises a route to the RTA, a manner in which the RT2 advertises a route to the RTB, a manner in which the RT3 advertises a route to the RTC, and a manner in which the RT4 advertises a route to the RTD are the same. For a manner in which the RT1 advertises a route to the RTA, refer to the foregoing related description, and details are not described herein again.

Correspondingly, at a traffic forwarding stage, service traffic destined for the destination prefix may be sent to the RT1 through the RTA, and the RT1 forwards the service traffic to the destination of the service traffic. The service traffic destined for the destination prefix may alternatively be sent to the RT2 through the RTB, and the RT2 forwards the service traffic to the destination of the service traffic. The service traffic destined for the destination prefix may alternatively be sent to the RT3 through the RTC, and the RT3 forwards the service traffic to the destination of the service traffic. The service traffic destined for the destination prefix may alternatively be sent to the RT4 through the RTD, and the RT4 forwards the service traffic to the destination of the service traffic.

In a specific example, a network device in the network domain G may send the service traffic destined for the destination prefix to the destination of the service traffic through the network domain B and the network domain A. There may be four transmission paths of the service traffic in the network domain B and the network domain A, which are respectively: RTG-RTE-RTA, RTG-RTE-RTC, RTH-RTF-RTB, and RTH-RTF-RTD. In an example, RTG-RTE and RTH-RTF may be equal-cost load sharing paths. In other words, RTG-RTE and RTH-RTF share service traffic of a same bandwidth, and service traffic received by the RTE is the same as service traffic received by the RTF. In this case, the RTE and the RTF are equal-cost load sharing devices of each other, and the RTG and the RTH are also equal-cost load sharing devices of each other. To be specific, as shown in FIG. 1b, traffic carried on the two paths represented by dashed lines is the same, and is both X. In a normal case, a bandwidth that can be provided by the RTE for forwarding the service traffic is the same as a bandwidth that can be provided by the RTF for forwarding the service traffic. The bandwidth that can be provided by the RTE for forwarding the service traffic is a sum of bandwidths that can be provided by the link RTA-RT1 and the link RTC-RT3 for forwarding the service traffic. The bandwidth that can be provided by the RTF for forwarding the service traffic is a sum of bandwidths that can be provided by the link RTB-RT2 and the link RTD-RT4 for forwarding the service traffic.

However, if the bandwidth that can be provided by the RTE for forwarding the service traffic decreases, for example, when the link RTA-RT1 is faulty, at the forwarding stage of the service traffic, the service traffic destined for the destination prefix is evenly distributed to the two paths RTG-RTE and RTH-RTF for forwarding. However, because the bandwidth that can be provided by the RTE for forwarding the service traffic decreases, the bandwidth actually provided by the RTE for forwarding the service traffic is insufficient to carry the service traffic received by the RTE. Consequently, the traffic on the link RTE-RTA and/or RTE-RTC is congested, causing severe packet loss of the service traffic.

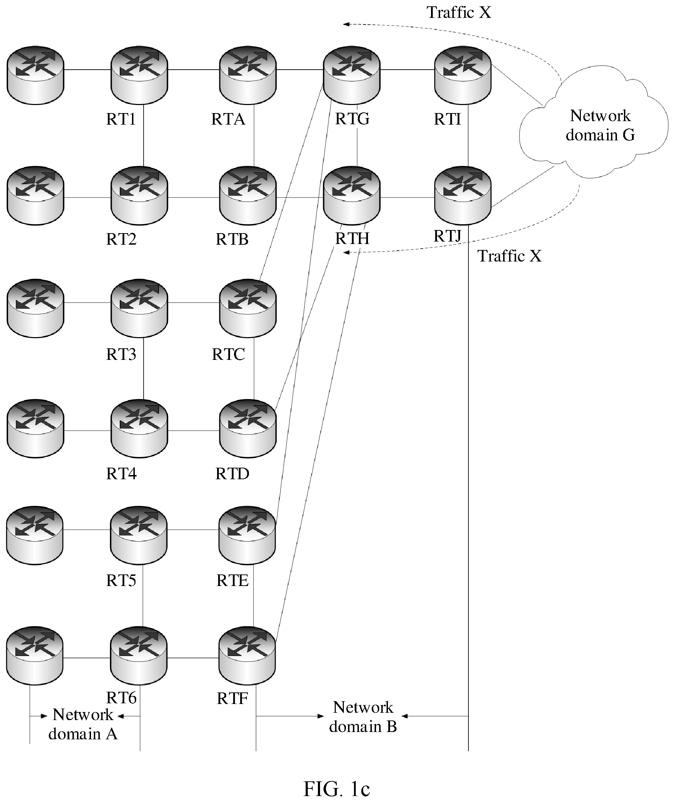

FIG. 1c is a diagram of another example application scenario according to an embodiment of this application. As shown in FIG. 1c:
an RT1, an RT2, an RT3, an RT4, an RT5, and an RT6 are boundary devices used by a network domain A to connect to a network domain B, an RTA, an RTB, an RTC, an RTD, an RTE, and an RTF are boundary devices used by the network domain B to connect to the network domain A, the RT1 is connected to the RTA, the RT2 is connected to the RTB, the RT3 is connected to the RTC, the RT4 is connected to the RTD, the RT5 is connected to the RTE, and the RT6 is connected to the RTF. In addition to the RTA, the RTB, the RTC, and the RTD, the network domain B further includes an RTG, an RTH, an RTI, and an RTJ, where the RTI and the RTJ are boundary devices used by the network domain B to connect to a network domain G.

A connection relationship between network devices in the network domain B is not described in detail herein.

In an example, the RT1, the RT2, the RT3, the RT4, the RT5, and the RT6 may advertise routes with a same destination prefix. For example, the RT1, the RT2, the RT3, the RT4, the RT5, and the RT6 may advertise routes including a same virtual next hop destination prefix by using a virtual next hop technology. Specifically, the RT1 advertises a route including a particular destination prefix to the RTA, the RT2 advertises a route including the destination prefix to the RTB, the RT3 advertises a route including the destination prefix to the RTC, the RT4 advertises a route including the destination prefix to the RTD, the RT5 advertises a route including the destination prefix to the RTE, and the RT6 advertises a route including the destination prefix to the RTF. A manner in which the RT1 advertises a route to the RTA, a manner in which the RT2 advertises a route to the RTB, a manner in which the RT3 advertises a route to the RTC, a manner in which the RT4 advertises a route to the RTD, a manner in which the RT5 advertises a route to the RTE, and a manner in which the RT6 advertises a route to the RTF are the same. For a manner in which the RT1 advertises a route to the RTA, refer to the foregoing related description, and details are not described herein again.

Correspondingly, at a traffic forwarding stage, service traffic destined for the destination prefix may be sent to the RT1 through the RTA, and the RT1 forwards the service traffic to the destination of the service traffic. The service traffic destined for the destination prefix may alternatively be sent to the RT2 through the RTB, and the RT2 forwards the service traffic to the destination of the service traffic. The service traffic destined for the destination prefix may alternatively be sent to the RT3 through the RTC, and the RT3 forwards the service traffic to the destination of the service traffic. The service traffic destined for the destination prefix may alternatively be sent to the RT4 through the RTD, and the RT4 forwards the service traffic to the destination of the service traffic. The service traffic destined for the destination prefix may alternatively be sent to the RT5 through the RTE, and the RT5 forwards the service traffic to the destination of the service traffic. The service traffic destined for the destination prefix may alternatively be sent to the RT6 through the RTF, and the RT6 forwards the service traffic to the destination of the service traffic.

In a specific example, a network device in the network domain G may send the service traffic destined for the destination prefix to the destination of the service traffic through the network domain B and the network domain A. There may be six transmission paths of the service traffic in the network domain B and the network domain A, which are respectively: RTI-RTG-RTA, RTI-RTG-RTC, RTI-RTG-RTE, RTJ-RTH-RTB, RTJ-RTH-RTD, and RTJ-RTH-RTF. In an example, the link RTI-RTG and the link RTJ-RTH may be equal-cost load sharing paths. In this case, the RTG and the RTH are equal-cost load sharing devices of each other, and the RTI and the RTJ are also equal-cost load sharing devices of each other. To be specific, as shown in FIG. 1c, traffic carried on the two paths represented by dashed lines is the same, and is both X.

In the network scenario shown in FIG. 1c:
the RTG may be forwarded through the links RTG-RTA, RTG-RTC, and RTG-RTE. In an example, the foregoing links RTG-RTA, RTG-RTC, and RTG-RTE may be equal-cost load sharing paths. In other words, the links RTA-RT1, RTC-RT3, and RTE-RT5 share service traffic of a same bandwidth. In a normal case, the links RTA-RT1, RTC-RT3, and RTE-RT5 can provide a same bandwidth for forwarding the service traffic.

However, if some links in the link RTA-RT1 are faulty, the RTG still evenly distributes the service traffic destined for the destination prefix to the links RTG-RTA, RTG-RTC, and RTG-RTE for forwarding. However, because some links in the link RTA-RT1 are faulty, the bandwidth actually provided by the link RTA-RT1 for forwarding the service traffic is insufficient to carry the service traffic received by the link RTA-RT1. Consequently, the traffic on the link RTA-RT1 is congested, causing severe packet loss of the service traffic.

Similarly, the RTH may be forwarded through the links RTH-RTB, RTH-RTD, and RTH-RTF. In an example, the foregoing links RTH-RTB, RTH-RTD, and RTH-RTF may be equal-cost load sharing paths. In other words, the links RTB-RT2, RTD-RT4, and RTF-RT6 share service traffic of a same bandwidth. In a normal case, the links RTB-RT2, RTD-RT4, and RTF-RT6 can provide a same bandwidth for forwarding the service traffic.

However, if some links in the link RTB-RT2 are faulty, the RTH still evenly distributes the service traffic destined for the destination prefix to the links RTH-RTB, RTH-RTD, and RTH-RTF for forwarding. However, because some links in the link RTB-RT2 are faulty, the bandwidth actually provided by the link RTB-RT2 for forwarding the service traffic is insufficient to carry the service traffic received by the link RTB-RT2. Consequently, the traffic on the link RTB-RT2 is congested, causing severe packet loss of the service traffic.

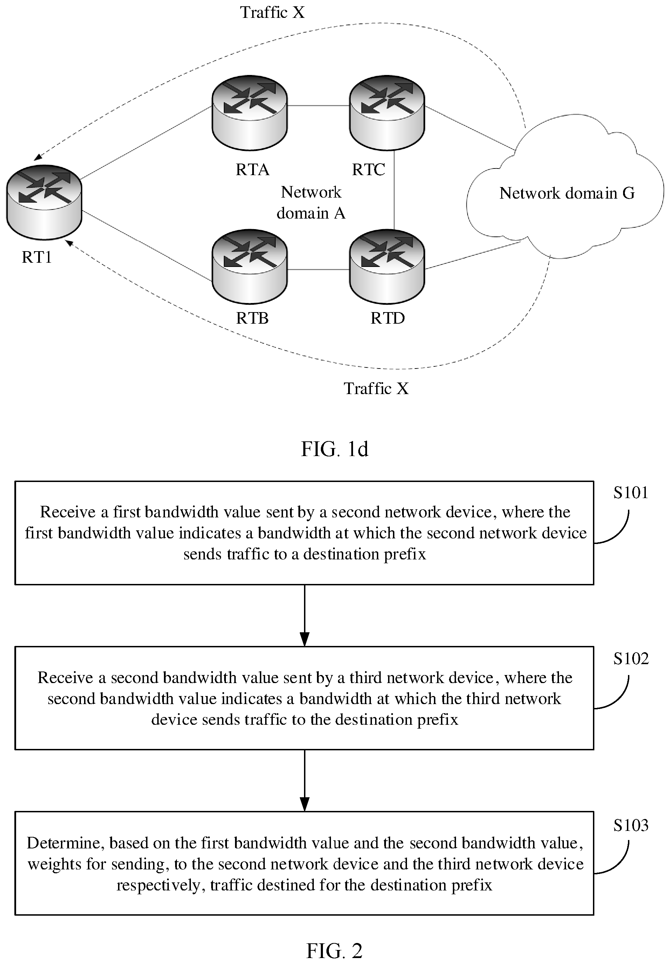

FIG. 1d is a diagram of still another example application scenario according to an embodiment of this application. As shown in FIG. 1d:
a network domain A includes network devices RT1, RTA, RTB, RTC, and RTD, and the RTC and the RTD are boundary devices used by the network domain A to connect to a network domain G.

In an example, the RT1 may advertise routes with a same destination prefix to the RTA and the RTB. Correspondingly, at a traffic forwarding stage, service traffic destined for the destination prefix may be sent to the RT1 through the RTA, and the RT1 forwards the service traffic to the destination of the service traffic. The service traffic destined for the destination prefix may alternatively be sent to the RT1 through the RTB, and the RT1 forwards the service traffic to the destination of the service traffic.

In a specific example, a network device in the network domain G may send the service traffic destined for the destination prefix to the destination of the service traffic through the network domain A. There may be two transmission paths of the service traffic in the network domain A, which are respectively: RTC-RTA-RT1 and RTD-RTB-RT1. In an example, the foregoing two paths may be equal-cost load sharing paths. To be specific, as shown in FIG. 1d, traffic carried on the two paths represented by dashed lines is the same, and is both X. In other words, a link RTA-RT1 and a link RTB-RT1 share service traffic of a same bandwidth. In this case, the RTA and the RTB are equal-cost load sharing devices of each other, and the RTC and the RTD are also equal-cost load sharing devices of each other. In a normal case, the link RTA-RT1 and the link RTB-RT1 can provide a same bandwidth for forwarding the service traffic.

However, if some links in the link RTA-RT1 are faulty, for example, four of five 100G links are disconnected, in this case, at the forwarding stage of the service traffic, the service traffic destined for the destination prefix is evenly distributed to the two paths RTC-RTA-RT1 and RTD-RTB-RT1 for forwarding. However, because some links in the link RTA-RT1 are faulty, the bandwidth actually provided by the link RTA-RT1 for forwarding the service traffic is insufficient to carry the service traffic received by the link RTA-RT1. Consequently, the traffic on the link RTA-RT1 is congested, causing severe packet loss of the service traffic.

In embodiments of this application, the network domain may be an Interior Gateway Protocol (Interior Gateway Protocol, IGP) domain.

To resolve the foregoing problem of severe packet loss of service traffic, an embodiment of this application provides an information processing method. The following describes the information processing method with reference to the accompanying drawings. In the following description, "service traffic" may also be briefly referred to as "traffic".

FIG. 2 is a schematic flowchart of an information processing method according to an embodiment of this application. The method shown in FIG. 2 may be applied to a first network device.

The information processing method provided in this embodiment of this application may be applied to the network scenario shown in FIG. 1a, FIG. 1b, FIG. 1c, or FIG. 1d. When the method is applied to the network scenario shown in FIG. 1a, the first network device may correspond to the RTC shown in FIG. 1a. When the method is applied to the network scenario shown in FIG. 1b, the first network device may correspond to the RTE shown in FIG. 1b. When the method is applied to the network scenario shown in FIG. 1c, the first network device may correspond to the RTG shown in FIG. 1c. When the method is applied to the network scenario shown in FIG. 1d, the first network device may correspond to the RTC shown in FIG. 1d.

The method shown in FIG. 2 may include the following S101 to S103.

S101: Receive a first bandwidth value sent by a second network device, where the first bandwidth value indicates a bandwidth at which the second network device sends traffic to a destination prefix.

S102: Receive a second bandwidth value sent by a third network device, where the second bandwidth value indicates a bandwidth at which the third network device sends traffic to the destination prefix.

In this embodiment of this application, the first network device, the second network device, and the third network device all belong to a first network domain. The first network domain may correspond to the network domain B in FIG. 1a to FIG. 1d.

When the information processing method shown in FIG. 2 is applied to the network scenario shown in FIG. 1a, FIG. 1b, or FIG. 1c, the second network device and the third network device are boundary devices connected to a second network domain, and the second network domain may be the network domain A in FIG. 1a to FIG. 1c.

When the method shown in FIG. 2 is applied to the application scenario shown in FIG. 1a, the second network device and the third network device may respectively correspond to the RTA and the RTB shown in FIG. 1a. When the method shown in FIG. 2 is applied to the application scenario shown in FIG. 1b, the second network device and the third network device may respectively correspond to the RTA and the RTB shown in FIG. 1b. When the method shown in FIG. 2 is applied to the application scenario shown in FIG. 1c, the second network device and the third network device may respectively correspond to the RTA and the RTC shown in FIG. 1c. When the method shown in FIG. 2 is applied to the application scenario shown in FIG. 1d, the second network device and the third network device may respectively correspond to the RTA and the RTB shown in FIG. 1d.

When the method shown in FIG. 2 is applied to the application scenario shown in FIG. 1a, the first bandwidth value may be a bandwidth provided by the link RTA-RT1 shown in FIG. 1a for sending traffic to the destination prefix, and the second bandwidth value may be a bandwidth provided by the link RTB-RT2 shown in FIG. 1a for sending traffic to the destination prefix.

When the method shown in FIG. 2 is applied to the application scenario shown in FIG. 1b, the first bandwidth value may be a bandwidth provided by the link RTA-RT1 shown in FIG. 1b for sending traffic to the destination prefix, and the second bandwidth value may be a bandwidth provided by the link RTB-RT2 shown in FIG. 1b for sending traffic to the destination prefix.

When the method shown in FIG. 2 is applied to the application scenario shown in FIG. 1c, the first bandwidth value may be a bandwidth provided by the link RTA-RT1 shown in FIG. 1c for sending traffic to the destination prefix, and the second bandwidth value may be a bandwidth provided by the link RTC-RT3 shown in FIG. 1c for sending traffic to the destination prefix.

When the method shown in FIG. 2 is applied to the application scenario shown in FIG. 1d, the first bandwidth value may be a bandwidth provided by the link RTA-RT1 shown in FIG. 1d for sending traffic to the destination prefix, and the second bandwidth value may be a bandwidth provided by the link RTB-RT1 shown in FIG. 1d for sending traffic to the destination prefix.

The following describes a specific implementation of S101.

In an example, the first network device may receive an IS-IS packet advertised by the second network device, where the IS-IS packet carries the first bandwidth value. After receiving the IS-IS packet, the first network device may parse the IS-IS packet to obtain the first bandwidth value. A location at which the first bandwidth value is carried in the IS-IS packet is not specifically limited in this embodiment of this application. For example, the first bandwidth value may be carried in any available field in the IS-IS packet. In a specific example, the IS-IS packet may include a prefix TLV, the prefix TLV may include a first sub-TLV, and the first sub-TLV may be, for example, used to carry the first bandwidth value.

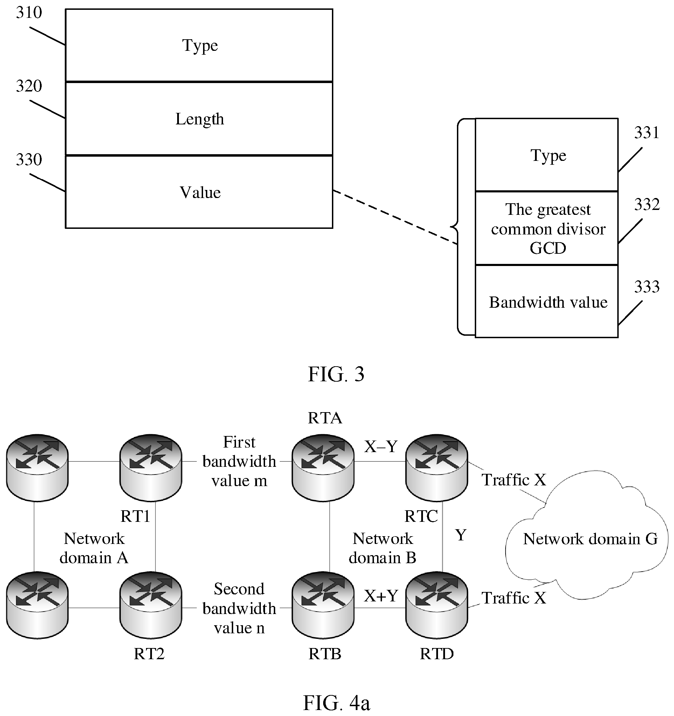

For a structure of the first sub-TLV, refer to FIG. 3. FIG. 3 is a diagram of a structure of a sub-TLV according to an embodiment of this application. As shown in FIG. 3, the first TLV includes a type field 310, a length field 320, and a value field 330, where the value field 330 further includes a type field 331, the greatest common divisor (the greatest common divisor, GCD) field 332, and a bandwidth value field 333.

The type field 310 indicates that the first sub-TLV is used to carry a bandwidth value.

The length field 320 indicates a length of the value field 330.

For example, the type field 331 may indicate a purpose of the bandwidth value. For example, the type field 331 may indicate, for example, unequal-cost load sharing. The first network device may perform S103 based on a value of the type field 331, to implement unequal-cost load sharing.

The GCD field 332 may indicate a unit of the bandwidth value. For example, a value of the GCD field 332 is 100, meaning that the unit of the bandwidth value is hectobytes.

The bandwidth value field 333 is used to carry a specific bandwidth value. For example, a value carried in the bandwidth value field 333 is 100, meaning that the first bandwidth value is 100 hectobytes.

FIG. 3 is merely shown for understanding this solution, and does not constitute any limitation on a specific structure of the first sub-TLV. For example, in another example, the value field 330 may not include the type field 331, but includes the GCD field 332 and the bandwidth value field 333, and the first bandwidth value is carried by using the GCD field 332 and the bandwidth value field 333.

The prefix TLV may be an extended Internet Protocol reachability (Extended Internet Protocol Reachability, Extended IP reachability) prefix TLV, or may be a multi-topology IP reach (Multi-Topology IP Reach, MT IP Reach) prefix TLV, or may be an Internet Protocol version 6 IP reach (Internet Protocol version 6 IP Reach, IPv6 IP Reach) prefix TLV, or may be an MT IPv6 IP Reach prefix TLV.

In another example, the first network device may receive an OSPF packet advertised by the second network device, where the OSPF packet carries the first bandwidth value. After receiving the OSPF packet, the first network device may parse the OSPF packet to obtain the first bandwidth value. A location at which the first bandwidth value is carried in the OSPF packet is not specifically limited in this embodiment of this application. For example, the first bandwidth value may be carried in any available field in the OSPF packet. In a specific example, the OSPF packet may include a prefix TLV, the prefix TLV may include a second sub-TLV, and the second sub-TLV may be, for example, used to carry the first bandwidth value. A structure of the second sub-TLV may be the same as that of the first sub-TLV. Therefore, for the structure of the second sub-TLV, refer to the foregoing part for describing the first sub-TLV. Details are not described herein again.

The prefix TLV may be an inter-area-prefix TLV (Inter-Area-Prefix TLV), or may be an external-prefix TLV (External-Prefix TLV), or may be an intra-area-prefix TLV (Intra-Area-Prefix TLV). This is not specifically limited in this embodiment of this application.

A specific implementation of S102 is similar to the specific implementation of S101. In an example, the first network device may receive an IS-IS packet sent by the third network device, where the IS-IS packet includes the second bandwidth value, and the second bandwidth value may be carried, for example, by using a third sub-TLV of a prefix TLV included in the IS-IS packet. In another example, the first network device may receive an OSPF packet sent by the third network device, where the OSPF packet includes the second bandwidth value, and the second bandwidth value may be carried, for example, by using a fourth sub-TLV of a prefix TLV included in the OSPF packet.

S103: Determine, based on the first bandwidth value and the second bandwidth value, weights, to the second network device and the third network device respectively, for sending traffic destined for the destination prefix.

After receiving the first bandwidth value and the second bandwidth value, the first network device may determine, based on the first bandwidth value and the second bandwidth value, the weights, to the second network device and the third network device respectively, the traffic destined for the destination prefix. In this embodiment of this application, to avoid severe packet loss that occurs after the traffic is sent to the second network device and that is caused by a decrease in the bandwidth that can be provided by the second network device for sending the traffic to the destination prefix, the first network device may separately send, to the second network device and the third network device, received traffic destined for the destination prefix, to reduce traffic received by the second network device, thereby avoiding packet loss of traffic. Specifically, the first network device may determine, based on the first bandwidth value and the second bandwidth value, the weights, to the second network device and the third network device respectively, the traffic destined for the destination prefix. In this way, when forwarding the traffic destined for the destination prefix, the first network device may send the traffic to the second network device and the third network device based on the foregoing weight, so that the traffic actually received by the second network device and the third network device matches a bandwidth that can be used by the second network device and the third network device to send traffic to the destination prefix, thereby properly using the bandwidth that is provided by the second network device and the third network device to send traffic to the destination prefix, to avoid a case in which the bandwidth that is provided by the second network device to send traffic to the destination prefix is insufficient to carry the traffic that is destined for the destination prefix and that is received by the second network device, thereby effectively avoiding packet loss of service traffic.

As can be learned from the foregoing descriptions of FIG. 1a, FIG. 1b, and FIG. 1d, in the conventional technology, the first network device sends the traffic destined for the destination prefix to the second network device, but does not send the traffic destined for the destination prefix to a fourth network device that is an equal-cost load sharing device of the first network device. In an example of this application, when the method shown in FIG. 2 is applied to the application scenario shown in FIG. 1a, FIG. 1b, or FIG. 1d, the first network device sends, to the third network device via the fourth network device, the traffic destined for the destination prefix. To be specific, the first network device may send some traffic to the fourth network device that is an equal-cost load sharing device of the first network device. Because the first network device sends, to the third network device via the fourth network device, the traffic destined for the destination prefix, the weight for sending, by the first network device to the third network device, the traffic destined for the destination prefix is a weight for sending, by the first network device to the fourth network device, traffic destined for the destination prefix. When the method shown in FIG. 2 is applied to the application scenario shown in FIG. 1a, the fourth network device may be the RTD. When the method shown in FIG. 2 is applied to the application scenario shown in FIG. 1b, the fourth network device may be the RTF. When the method shown in FIG. 2 is applied to the application scenario shown in FIG. 1d, the fourth network device may be the RTD.

The following describes a specific implementation of S103.

For ease of description, in the following description, "traffic that uses a destination prefix as a destination" is briefly referred to as "traffic".

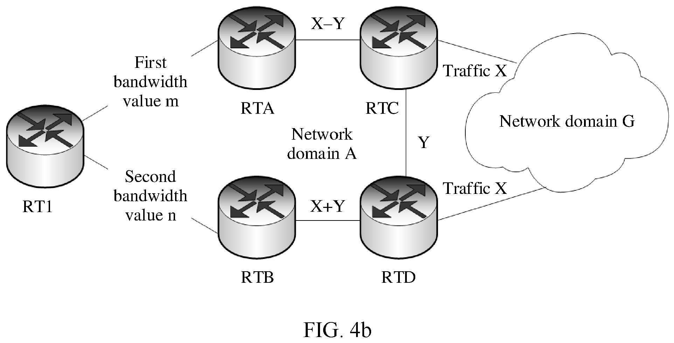

When the method shown in FIG. 2 is applied to the application scenario shown in FIG. 1a or FIG. 1d, it may be determined that the weight for sending, to the second network device, the traffic destined for the destination prefix is $2 * \frac{m}{m + n}$, and it is determined that the weight for sending, to the third network device, the traffic destined for the destination prefix is $\frac{n - m}{m + n}$, where m is the first bandwidth value, and n is the second bandwidth value. When the method shown in FIG. 2 is applied to the application scenario shown in FIG. 1a, the method may be understood with reference to FIG. 4a. FIG. 4a is a diagram of an example application scenario according to an embodiment of this application. When the method shown in FIG. 2 is applied to the application scenario shown in FIG. 1d, the method may be understood with reference to FIG. 4b. FIG. 4b is a diagram of an example application scenario according to an embodiment of this application.

As shown in FIG. 4a and FIG. 4b, the RTC and the RTD are equal-cost load sharing nodes of each other. Traffic received by the RTC from a network domain G is X, and traffic received by the RTD from the network domain G is also X. Correspondingly, traffic received by the RTB from the RTD is X. Assuming that a part (Y) of the traffic X received by the RTC is forwarded to the RTB by using the RTD, a weight for sending the traffic to the third network device RTB is $\frac{Y}{X}$, and a weight for sending the traffic to the second network device RTA is $1 - \frac{Y}{X}$.

If the RTC sends the traffic Y to the RTD, traffic transmitted by a link RTC-RTA is X-Y, and traffic transmitted by a link RTD-RTB is X+Y. To be specific, traffic received by the RTA is X-Y, and traffic received by RTB is X+Y. To match the traffic forwarded by the RTA and the RTB with the bandwidth provided by the RTA and the RTB for forwarding the traffic, the following formula (1) should be satisfied: $\frac{X - Y}{X + Y} = \frac{m}{n}$

The following formula (2) may be obtained by transforming the formula (1): $\left(n-m\right) ∗ X = \left(n+m\right) ∗ Y$

Further, the formula (3) may be obtained by transforming the formula (2): $\frac{Y}{X} = \frac{n - m}{n + m}$

It may be obtained, according to the formula (3), that the weight for sending the traffic to the third network device is $\frac{n - m}{n + m}$. Further, it is determined that the weight for sending the traffic to the second network device is $1 - \frac{n - m}{n + m} = \frac{2 m}{n + m}$. In an example, considering that a bandwidth of a link between the first network device and the fourth network device is limited, when the weight for sending the traffic to the third network device is determined, the bandwidth of the link between the first network device and the fourth network device may be further considered, to avoid packet loss when traffic is transmitted between the first network device and the fourth network device because traffic is flooded to the fourth network device.

In a specific example, assuming that the bandwidth of the link between the first network device and the fourth network device is j, and a bandwidth of a link between the first network device and the second network device is k, if $\frac{n - m}{n + m} \leq \frac{j}{k}$, it indicates that a weight for offloading traffic to the fourth network device is proper. Therefore, it may be determined that the weight for sending the traffic to the third network device is $\frac{n - m}{n + m}$, and it is determined that the weight for sending the traffic to the second network device is $\frac{2 m}{n + m}$. If $\frac{n - m}{n + m} > \frac{j}{k}$, it indicates that the weight for offloading traffic to the fourth network device is excessively large. Therefore, it may be determined that the weight for sending the traffic to the third network device is $\frac{j}{k}$*,* and it is determined that the weight for sending the traffic to the second network device is $1 - \frac{j}{k}$.

In an example, before performing S103, the first network device may further determine whether a first traffic optimization condition is met, and when the first traffic optimization condition is met, perform S103. The first traffic optimization condition is a condition in which severe packet loss of traffic occurs if equal-cost load sharing continues to be used. In an example, when the first bandwidth value is less than the second bandwidth value, the first bandwidth value is not 0, and a difference between the first bandwidth value and the second bandwidth value is relatively large, continuing to use the conventional equal-cost load sharing scheme causes severe packet loss on the link RTA-RT1. Therefore, in an example, the first traffic optimization condition may be: The first bandwidth value is less than the second bandwidth value, the first bandwidth value is not 0, and a difference between the first bandwidth value and the second bandwidth value is greater than or equal to a first bandwidth threshold. In other words, the first network device may perform S103 when determining that the first bandwidth value is less than the second bandwidth value, the first bandwidth value is not 0, and the difference between the first bandwidth value and the second bandwidth value is greater than or equal to the first bandwidth threshold.

The first bandwidth threshold is not specifically limited in this embodiment of this application. The first bandwidth threshold may be determined based on an actual situation. For example, the first bandwidth threshold may be 0.4 times the second bandwidth value, that is, the first bandwidth value<the second bandwidth value*0.6.

In a specific example, after S103 is performed, the first network device may further store, in a forwarding entry, the weights, to the second network device and the third network device respectively, the traffic destined for the destination prefix, so that at a traffic forwarding stage, the weight for sending the traffic to the second network device and the third network device is determined based on the forwarding entry, thereby forwarding the received traffic based on the weight.

When the method shown in FIG. 2 is applied to the application scenario shown in FIG. 1b, in addition to receiving the first bandwidth value and the second bandwidth value, the first network device may further receive a third bandwidth value sent by a fifth network device and a fourth bandwidth value sent by a sixth network device. The third bandwidth value indicates a bandwidth at which the fifth network device sends traffic to the destination prefix, and the fourth bandwidth value indicates a bandwidth at which the sixth network device sends traffic to the destination prefix.

A principle of a specific implementation in which the first network device receives the third bandwidth value and the fourth bandwidth value is the same as a principle of the implementation in which the first network device receives the first bandwidth value. Therefore, for the specific implementation in which the first network device receives the third bandwidth value and the fourth bandwidth value, refer to the foregoing part of description that the first network device receives the first bandwidth value. Details are not described herein.

Both the fifth network device and the second network device are connected to the first network device, and the fifth network device and the second network device are load sharing devices of each other. In other words, traffic received by the first network device may be load-shared to the second network device and the fifth network device for forwarding. Both the third network device and the sixth network device are connected to the fourth network device, and the third network device and the sixth network device may be load sharing devices of each other. In other words, traffic received by the fourth network device may be load-shared to the third network device and the sixth network device for forwarding. In the scenario shown in FIG. 1b, the first network device, the second network device, the third network device, the fourth network device, the fifth network device, and the sixth network device may respectively correspond to the RTE, the RTA, the RTB, the RTF, the RTC, and the RTD.

Correspondingly, in a specific implementation of S103, weights for sending, to the second network device, the fifth network device, and the fourth network device respectively, the traffic destined for the destination prefix may be determined based on the first bandwidth value, the second bandwidth value, the third bandwidth value, and the fourth bandwidth value. To be specific, traffic that is originally load-shared by the second network device and the fifth network device is load-shared by the second network device, the fifth network device, and the fourth network device, to reduce traffic received by the second network device. Correspondingly, a case in which severe packet loss of traffic occurs because a bandwidth value provided by the second network device is insufficient to carry the traffic received by the second network device is avoided.

In an example, before performing S103, the first network device may further determine whether a second traffic optimization condition is met, and when the second traffic optimization condition is met, perform S103. The second traffic optimization condition is a condition in which severe packet loss of traffic occurs if equal-cost load sharing continues to be used. In an example, when a first total bandwidth provided by the first network device is less than a second total bandwidth provided by the fourth network device, the first total bandwidth is not equal to 0, and a difference between the first total bandwidth and the second total bandwidth is greater than or equal to a second bandwidth threshold, continuing to use the conventional equal-cost load sharing scheme causes severe packet loss on the link RTA-RT1. The first total bandwidth is a sum of the first bandwidth value and the third bandwidth value, and the second total bandwidth is a sum of the second bandwidth value and the fourth bandwidth value. Therefore, in an example, the second traffic optimization condition may be: The first total bandwidth provided by the first network device is less than the second total bandwidth provided by the fourth network device, the first total bandwidth is not equal to 0, and a difference between the first total bandwidth and the second total bandwidth is greater than or equal to the second bandwidth threshold. In other words, the first network device may perform S103 when determining that the first total bandwidth provided by the first network device is less than the second total bandwidth provided by the fourth network device, the first total bandwidth is not equal to 0, and the difference between the first total bandwidth and the second total bandwidth is greater than or equal to the second bandwidth threshold.

The second bandwidth threshold is not specifically limited in this embodiment of this application. The second bandwidth threshold may be determined based on an actual situation. For example, the second bandwidth threshold may be 0.4 times the second total bandwidth, that is, the first total bandwidth<the second total bandwidth*0.6.

In a specific example, in a specific implementation of "determining, based on the first bandwidth value, the second bandwidth value, the third bandwidth value, and the fourth bandwidth value, weights for sending, to the second network device, the fifth network device, and the fourth network device respectively, the traffic destined for the destination prefix", the following may be included:
determining that the weight for sending, to the fourth network device, the traffic destined for the destination prefix is: $\frac{b + d - a - c}{a + b + c + d}$;
determining that the weight for sending, to the second network device, the traffic destined for the destination prefix is: $\frac{2 ∗ \left(a+c\right)}{a + b + c + d} ∗ \frac{a}{a + c}$; and
determining that the weight for sending, to the fifth network device, the traffic destined for the destination prefix is: $\frac{2 ∗ \left(a+c\right)}{a + b + c + d} ∗ \frac{c}{a + c}$, where
a is the first bandwidth value, b is the second bandwidth value, c is the third bandwidth value, and d is the fourth bandwidth value.

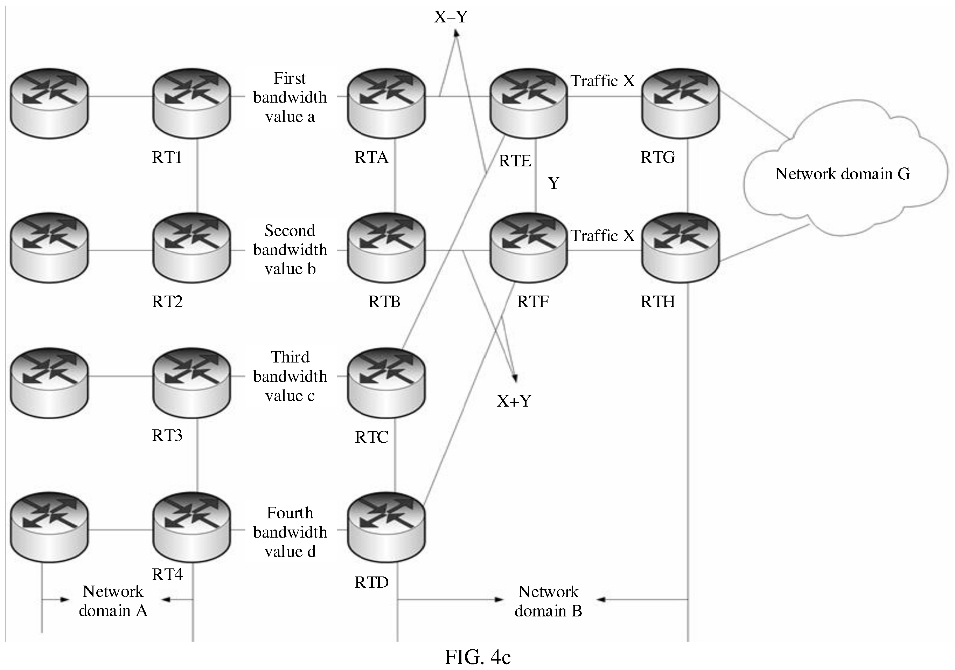

Refer to FIG. 4c for understanding. FIG. 4c is a diagram of an example application scenario according to an embodiment of this application.

As shown in FIG. 4c, a link RTG-RTE and a link RTH-RTF are equal-cost load sharing links of each other. Traffic received by an RTE through the link RTG-RTE is X, and traffic received by an RTF through the link RTH-RTF is also X. It is assumed that a part (Y) of the traffic X received by the RTE is forwarded to the RTF, and the RTF forwards the traffic to a destination of the traffic through an RTB and an RTD. In this case, a weight for sending traffic to the fourth network device RTF is $\frac{Y}{X}$, a weight for sending traffic to the second network device RTA is $\left(1-\frac{Y}{X}\right) ∗ \frac{a}{a + c}$ , and a weight for sending traffic to the fifth network device RTC is $\left(1-\frac{Y}{X}\right) ∗ \frac{c}{a + c}$.

If the RTE sends the traffic Y to the RTF, traffic transmitted by links RTE-RTA and RTE-RTC is X-Y, and traffic transmitted by links RTF-RTB and RTF-RTD is X+Y. To match traffic forwarded by the RTA, the RTB, the RTC and the RTD with bandwidths provided by the RTA, the RTB, the RTC and the RTD for forwarding the traffic, the following formula (4) should be satisfied: $\frac{X - Y}{X + Y} = \frac{a + c}{b + d}$

The following formula (5) may be obtained by transforming the formula (4): $\left(b+d-a-c\right) ∗ X = \left(a+b+c+d\right) ∗ Y$

Further, the formula (6) may be obtained by transforming the formula (5): $\frac{Y}{X} = \frac{b + d - a - c}{a + b + c + d}$

It may be obtained, according to the formula (6), that the weight for sending the traffic to the fourth network device is $\frac{b + d - a - c}{a + b + c + d}$. Further, it is determined that the weight for sending the traffic to the second network device is $\left(1-\frac{b + d - a - c}{a + b + c + d}\right) * \frac{a}{a + c} = \frac{2 ∗ \left(a+c\right)}{a + b + c + d} ∗ \frac{a}{a + c}$, and it is determined that the weight for sending the traffic to the fourth network device is $\left(1-\frac{b + d - a - c}{a + b + c + d}\right) * \frac{c}{a + c} = \frac{2 ∗ \left(a+c\right)}{a + b + c + d} ∗ \frac{c}{a + c}$.

In an example, considering that a bandwidth of a link between the first network device and the fourth network device is limited, when the weight for sending the traffic to the fourth network device is determined, the bandwidth of the link between the first network device and the fourth network device may be further considered, to avoid packet loss when traffic is transmitted between the first network device and the fourth network device because traffic is flooded to the fourth network device.

In a specific example, assuming that the bandwidth of the link between the first network device and the fourth network device is e, and a bandwidth of a link between the first network device and the second network device is f, if $\frac{b + d - a - c}{a + b + c + d} \leq \frac{e}{f}$, it indicates that a weight for offloading traffic to the fourth network device is proper. Therefore, it may be determined that the weight for sending the traffic to the fourth network device is $\frac{b + d - a - c}{a + b + c + d}$, it is determined that the weight for sending the traffic to the second network device is $\frac{2 ∗ \left(a+c\right)}{a + b + c + d} ∗ \frac{a}{a + c}$, and it is determined that the weight for sending the traffic to the fifth network device is $\frac{2 ∗ \left(a+c\right)}{a + b + c + d} ∗ \frac{a}{a + c}$. If $\frac{b + d - a - c}{a + b + c + d} > \frac{e}{f}$, it indicates that the weight for offloading traffic to the fourth network device is excessively large. Therefore, it may be determined that the weight for sending the traffic to the fourth network device is $\frac{e}{f}$, it is determined that the weight for sending, to the second network device, the traffic destined for the destination prefix is $\left(1-\frac{e}{f}\right) ∗ \frac{a}{a + c}$, and it is determined that the weight for sending, to the fifth network device, the traffic destined for the destination prefix is $\left(1-\frac{e}{f}\right) ∗ \frac{c}{a + c}$.

When the method shown in FIG. 2 is applied to the application scenario shown in FIG. 1c, the second network device and the third network device are separately connected to the first network device. In addition, the first network device may be further connected to a seventh network device. The second network device, the third network device, and the seventh network device may be load sharing devices of each other. The traffic received by the first network device may be load-shared to three network devices: the second network device, the third network device, and the seventh network device for forwarding. The first network device, the second network device, the third network device, and the seventh network device may respectively correspond to the RTG, the RTA, the RTC, and the RTE in the scenario shown in FIG. 1c.

In this case, in addition to receiving the first bandwidth value and the second bandwidth value, the first network device may further receive a fifth bandwidth value sent by the seventh network device. The fifth bandwidth value indicates a bandwidth at which the seventh network device sends traffic to a destination prefix. An implementation principle of receiving the fifth bandwidth value by the first network device is the same as a principle of receiving the first bandwidth value by the first network device. Therefore, for a specific implementation in which the first network device receives the fifth bandwidth value, refer to the foregoing part of description that the first network device receives the first bandwidth value. Details are not described herein.

Correspondingly, in this scenario, in a specific implementation of S103, weights for sending, to the second network device, the third network device, and the seventh network device respectively, the traffic destined for the destination prefix may be determined based on the first bandwidth value, the second bandwidth value, and the fifth bandwidth value. To be specific, when the traffic received by the first network device may be load-shared to three network devices (the second network device, the third network device, and the seventh network device) for forwarding, weights of traffic sent to the three network devices may be determined based on bandwidth values provided by the three network devices, so that bandwidths actually provided by the three network devices match traffic actually carried by the three network devices, thereby avoiding packet loss of traffic.

In a specific example, a sum of the first bandwidth value, the second bandwidth value, and the fifth bandwidth value is referred to as a third total bandwidth. To enable the bandwidths actually provided by the foregoing three network devices to match the traffic actually carried by the three network devices, it may be determined that the weight for sending, to the second network device, the traffic destined for the destination prefix is a ratio of the first bandwidth value to the third total bandwidth, it is determined that the weight for sending, to the third network device, the traffic destined for the destination prefix is a ratio of the second bandwidth value to the third total bandwidth; and it is determined that the weight for sending, to the seventh network device, the traffic destined for the destination prefix is a ratio of the fifth bandwidth value to the third total bandwidth.

In a specific example, after S103 is performed, the first network device may further store, in a forwarding entry, the weights for sending, to the second network device, the third network device, and the seventh network device respectively, the traffic destined for the destination prefix, so that at a traffic forwarding stage, the weight for sending the traffic to the second network device, the third network device, and the seventh network device separately is determined based on the forwarding entry, thereby forwarding the received traffic based on the weight.

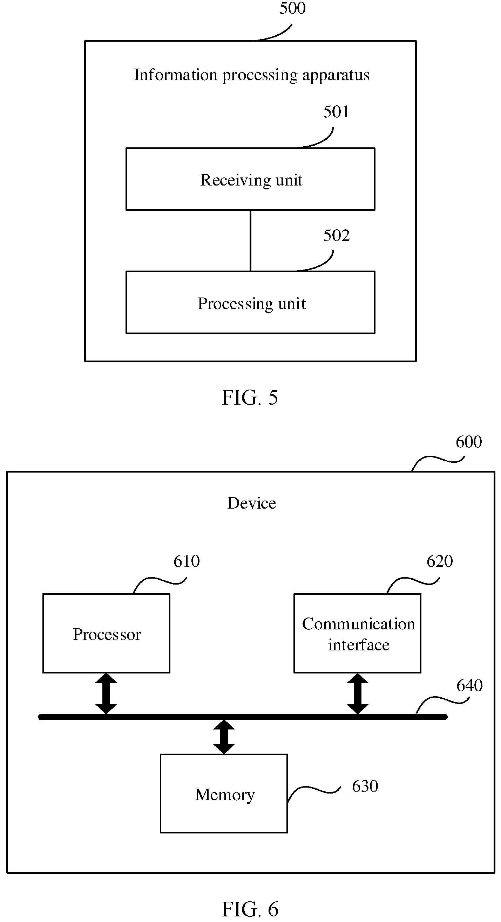

Based on the information processing method provided in the foregoing embodiment, an embodiment of this application further provides a corresponding apparatus. FIG. 5 is a diagram of a structure of an information processing apparatus according to an embodiment of this application. The information processing apparatus 500 shown in FIG. 5 may be used in a first network device, and is configured to perform the information processing method that is performed by the first network device and that is provided in the foregoing method embodiment. The information processing apparatus 500 may include a receiving unit 501 and a processing unit 502.

The receiving unit 501 is configured to: receive a first bandwidth value sent by a second network device, where the first bandwidth value indicates a bandwidth at which the second network device sends traffic to a destination prefix; and receive a second bandwidth value sent by a third network device, where the second bandwidth value indicates a bandwidth at which the third network device sends traffic to the destination prefix; and
the processing unit 502 is configured to determine, based on the first bandwidth value and the second bandwidth value, weights, to the second network device and the third network device respectively, for sending traffic destined for the destination prefix.

In a possible implementation, the first network device, the second network device, and the third network device all belong to a first network domain, and the second network device and the third network device are boundary devices connected to a second network domain.

In a possible implementation, the first network device sends, to the third network device via a fourth network device, the traffic destined for the destination prefix, and the first network device and the fourth network device are equal-cost load sharing devices of each other.

In a possible implementation, the processing unit 502 is configured to: determine that the weight for sending, to the second network device, the traffic destined for the destination prefix is: $2 * \frac{m}{m + n}$; and determine that the weight for sending, to the third network device, the traffic destined for the destination prefix is: $\frac{n - m}{m + n}$, where it is determined that m is the first bandwidth value, and n is the second bandwidth value.

In a possible implementation, the processing unit 502 is configured to: determine that the weight for sending, to the second network device, the traffic destined for the destination prefix is: $1 - \frac{j}{k}$; and determine that the weight for sending, to the third network device, the traffic destined for the destination prefix is $\frac{j}{k}$, where k is a bandwidth of a link between the first network device and the second network device, and j is a bandwidth of a link between the first network device and the fourth network device.

In a possible implementation, the processing unit 502 is further configured to: before determining the weights, to the second network device and the third network device respectively, the traffic destined for the destination prefix, determine that the first bandwidth value is less than the second bandwidth value, the first bandwidth value is not 0, and a difference between the first bandwidth value and the second bandwidth value is greater than or equal to a first bandwidth threshold.

In a possible implementation, the receiving unit 501 is further configured to: receive a third bandwidth value sent by a fifth network device, where the third bandwidth value indicates a bandwidth at which the fifth network device sends traffic to the destination prefix; and receive a fourth bandwidth value sent by a sixth network device, where the fourth bandwidth value indicates a bandwidth at which the sixth network device sends traffic to the destination prefix; and the processing unit 502 is configured to: determine, based on the first bandwidth value, the second bandwidth value, the third bandwidth value, and the fourth bandwidth value, weights for sending, to the second network device, the fifth network device, and the fourth network device respectively, the traffic destined for the destination prefix, where the second network device and the fifth network device are separately connected to the first network device, the third network device and the sixth network device are separately connected to the fourth network device, and the traffic that is destined for the destination prefix and that is received by the fourth network device is forwarded via the third network device and the sixth network device.

In a possible implementation, the processing unit 502 is further configured to: before determining the weights for sending, to the second network device, the fifth network device, and the fourth network device respectively, the traffic destined for the destination prefix, determine that a first total bandwidth provided by the first network device is less than a second total bandwidth provided by the fourth network device, the first total bandwidth is not equal to 0, and a difference between the first total bandwidth and the second total bandwidth is greater than or equal to a second bandwidth threshold, where the first total bandwidth is a sum of the first bandwidth value and the third bandwidth value, and the second total bandwidth is a sum of the second bandwidth value and the fourth bandwidth value.

In a possible implementation, the processing unit 502 is configured to: determine that the weight for sending, to the fourth network device, the traffic destined for the destination prefix is $\frac{b + d - a - c}{a + b + c + d}$; determine that the weight for sending, to the second network device, the traffic destined for the destination prefix is $\frac{2 ∗ \left(a+c\right)}{a + b + c + d} ∗ \frac{a}{a + c}$; and determine that the weight for sending, to the fifth network device, the traffic destined for the destination prefix is: $\frac{2 ∗ \left(a+c\right)}{a + b + c + d} ∗ \frac{c}{a + c}$, where a is the first bandwidth value, b is the second bandwidth value, c is the third bandwidth value, and d is the fourth bandwidth value.

In a possible implementation, the processing unit 502 is configured to: determine that the weight for sending, to the fourth network device, the traffic destined for the destination prefix is: $\frac{e}{f}$; determine that the weight for sending, to the second network device, the traffic destined for the destination prefix is: $\left(1-\frac{e}{f}\right) ∗ \frac{a}{a + c}$; and determine that the weight for sending, to the fifth network device, the traffic destined for the destination prefix is: $\left(1-\frac{e}{f}\right) ∗ \frac{c}{a + c}$, where f is a sum of a bandwidth of a link between the first network device and the second network device and a bandwidth of a link between the first network device and the fifth network device, and e is a bandwidth of a link between the first network device and the fourth network device.

In a possible implementation, the second network device and the third network device are separately connected to the first network device, and the first network device is further connected to a seventh network device. The receiving unit 501 is further configured to: receive a fifth bandwidth value sent by the seventh network device, where the fifth bandwidth value indicates a bandwidth at which the seventh network device sends traffic to the destination prefix; and the processing unit 502 is configured to determine, based on the first bandwidth value, the second bandwidth value, and the fifth bandwidth value, weights for sending, to the second network device, the third network device, and the seventh network device respectively, the traffic destined for the destination prefix.

In a possible implementation, the processing unit 502 is configured to: determine that the weight for sending, to the second network device, the traffic destined for the destination prefix is: a ratio of the first bandwidth value to a third total bandwidth, where the third total bandwidth is a sum of the first bandwidth value, the second bandwidth value, and the fifth bandwidth value; determine that the weight for sending, to the third network device, the traffic destined for the destination prefix is: a ratio of the second bandwidth value to the third total bandwidth; and determine that the weight for sending, to the seventh network device, the traffic destined for the destination prefix is: a ratio of the fifth bandwidth value to the third total bandwidth.

In a possible implementation, the receiving unit 501 is configured to receive an intermediate system to intermediate system IS-IS packet advertised by the second network device, where the IS-IS packet includes the first bandwidth value.

In a possible implementation, the IS-IS packet includes a prefix type length value TLV, the prefix TLV includes a first sub-TLV, and the first sub-TLV includes the first bandwidth value.

In a possible implementation, the receiving unit 501 is configured to receive an open shortest path first OSPF packet advertised by the second network device, where the OSPF packet includes the first bandwidth value.

In a possible implementation, the OSPF packet includes a prefix type length value TLV, the prefix TLV includes a second sub-TLV, and the second sub-TLV includes the first bandwidth value.

In a possible implementation, the processing unit 502 is further configured to store, in a forwarding entry, the weights, to the second network device and the third network device respectively, the traffic destined for the destination prefix.

It should be noted that a hardware structure of the information processing apparatus mentioned above may be a structure shown in FIG. 6. FIG. 6 is a diagram of a structure of a device according to an embodiment of this application.

Refer to FIG. 6. The device 600 includes a processor 610, a communication interface 620, and a memory 630. The device 600 may include one or more processors 610. In FIG. 6, one processor is used as an example. In this embodiment of this application, the processor 610, the communication interface 620, and the memory 630 may be connected via a bus system or in another manner. In FIG. 6, for example, a bus system 640 is used for connection.

The processor 610 may be a central processing unit (central processing unit, CPU), a network processor (network processor, NP), or a combination of a CPU and an NP. The processor 610 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 630 may include a volatile memory (English: volatile memory), for example, a random-access memory (random-access memory, RAM). The memory 630 may also include a non-volatile memory (English: non-volatile memory), for example, a flash memory (English: flash memory), a hard disk drive (hard disk drive, HDD), or a solid-state drive (solid-state drive, SSD). The memory 630 may further include a combination of the foregoing types of memories. For example, the memory 630 may store the weights, to the second network device and the third network device respectively, the traffic destined for the destination prefix.

Optionally, the memory 630 stores an operating system and a program, an executable module or a data structure, or a subset thereof, or an extension set thereof, where the program may include various operation instructions for implementing various operations. The operating system may include various system programs, for implementing various basic services and processing hardware-based tasks. The processor 610 may read the program in the memory 630, to implement the information processing method provided in embodiments of this application.

The bus system 640 may be a peripheral component interconnect (peripheral component interconnect, PCI) bus, an extended industry standard architecture (extended industry standard architecture, EISA) bus, or the like. The bus system 640 may be classified into an address bus, a data bus, a control bus, and the like. For ease of indication, the bus is indicated by only one bold line in FIG. 6. However, it does not indicate that there is only one bus or only one type of bus.

An embodiment of this application further provides a computer-readable storage medium, including instructions or a computer program. When the instructions or the computer program is run on a computer, the computer is caused to perform the information processing method provided in the foregoing embodiments.

An embodiment of this application further provides a computer program product including instructions or a computer program. When the computer program product is run on a computer, the computer is caused to perform the information processing method provided in the foregoing embodiments.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in embodiments of this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that facilitates a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing descriptions are merely specific implementations of the present invention.

The foregoing embodiments are merely intended for describing the technical solutions of this application rather than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. An information processing method, applied to a first network device, wherein the method comprises:
receiving a first bandwidth value sent by a second network device, wherein the first bandwidth value indicates a bandwidth at which the second network device sends traffic to a destination prefix;
receiving a second bandwidth value sent by a third network device, wherein the second bandwidth value indicates a bandwidth at which the third network device sends traffic to the destination prefix; and
determining, based on the first bandwidth value and the second bandwidth value, weights, to the second network device and the third network device respectively, for sending traffic destined for the destination prefix.

2. The method according to claim 1, wherein the first network device, the second network device, and the third network device all belong to a first network domain, and the second network device and the third network device are boundary devices connected to a second network domain.

3. The method according to claim 1 or 2, wherein the first network device sends, to the third network device via a fourth network device, the traffic destined for the destination prefix, and the first network device and the fourth network device are equal-cost load sharing devices of each other.

4. The method according to claim 3, wherein determining, based on the first bandwidth value and the second bandwidth value, the weights, to the second network device and the third network device respectively, the traffic destined for the destination prefix comprises:
determining that the weight for sending, to the second network device, the traffic destined for the destination prefix is: $2 * \frac{m}{m + n}$; and
determining that the weight for sending, to the third network device, the traffic destined for the destination prefix is: $\frac{n - m}{m + n}$, wherein
it is determined that m is the first bandwidth value, and n is the second bandwidth value.

5. The method according to claim 3, wherein determining, based on the first bandwidth value and the second bandwidth value, the weights, to the second network device and the third network device respectively, the traffic destined for the destination prefix comprises:
determining that the weight for sending, to the second network device, the traffic destined for the destination prefix is: $1 - \frac{j}{k}$; and
determining that the weight for sending, to the third network device, the traffic destined for the destination prefix is: $\frac{j}{k}$, wherein
k is a bandwidth of a link between the first network device and the second network device, and j is a bandwidth of a link between the first network device and the fourth network device.

6. The method according to claim 4 or 5, wherein before determining the weights, to the second network device and the third network device respectively, the traffic destined for the destination prefix, the method further comprises:
determining that the first bandwidth value is less than the second bandwidth value, the first bandwidth value is not 0, and a difference between the first bandwidth value and the second bandwidth value is greater than or equal to a first bandwidth threshold.

7. The method according to claim 3, wherein the method further comprises:
receiving a third bandwidth value sent by a fifth network device, wherein the third bandwidth value indicates a bandwidth at which the fifth network device sends traffic to the destination prefix; and
receiving a fourth bandwidth value sent by a sixth network device, wherein the fourth bandwidth value indicates a bandwidth at which the sixth network device sends traffic to the destination prefix, wherein
determining, based on the first bandwidth value and the second bandwidth value, the weights, to the second network device and the third network device respectively, the traffic destined for the destination prefix comprises:
determining, based on the first bandwidth value, the second bandwidth value, the third bandwidth value, and the fourth bandwidth value, weights for sending, to the second network device, the fifth network device, and the fourth network device respectively, the traffic destined for the destination prefix, wherein
the second network device and the fifth network device are separately connected to the first network device, the third network device and the sixth network device are separately connected to the fourth network device, and the traffic that is destined for the destination prefix and that is received by the fourth network device is forwarded via the third network device and the sixth network device.

8. The method according to claim 7, wherein before determining the weights for sending, to the second network device, the fifth network device, and the fourth network device respectively, the traffic destined for the destination prefix, the method further comprises:
determining that a first total bandwidth provided by the first network device is less than a second total bandwidth provided by the fourth network device, the first total bandwidth is not equal to 0, and a difference between the first total bandwidth and the second total bandwidth is greater than or equal to a second bandwidth threshold, wherein the first total bandwidth is a sum of the first bandwidth value and the third bandwidth value, and the second total bandwidth is a sum of the second bandwidth value and the fourth bandwidth value.

9. The method according to claim 7 or 8, wherein determining the weights for sending, to the second network device, the fifth network device, and the fourth network device respectively, the traffic destined for the destination prefix comprises:
determining that the weight for sending, to the fourth network device, the traffic destined for the destination prefix is: $\frac{b + d - a - c}{a + b + c + d}$;
determining that the weight for sending, to the second network device, the traffic destined for the destination prefix is: $\frac{2 ∗ \left(a+c\right)}{a + b + c + d} ∗ \frac{a}{a + c}$; and
determining that the weight for sending, to the fifth network device, the traffic destined for the destination prefix is: $\frac{2 ∗ \left(a+c\right)}{a + b + c + d} ∗ \frac{c}{a + c}$, wherein
a is the first bandwidth value, b is the second bandwidth value, c is the third bandwidth value, and d is the fourth bandwidth value.

10. The method according to claim 7 or 8, wherein determining the weights for sending, to the second network device, the fifth network device, and the fourth network device respectively, the traffic destined for the destination prefix comprises:
determining that the weight for sending, to the fourth network device, the traffic destined for the destination prefix is: $\frac{e}{f}$;
determining that the weight for sending, to the second network device, the traffic destined for the destination prefix is: $\left(1-\frac{e}{f}\right) ∗ \frac{a}{a + c}$; and
determining that the weight for sending, to the fifth network device, the traffic destined for the destination prefix is: $\left(1-\frac{e}{f}\right) ∗ \frac{c}{a + c}$, wherein
f is a sum of a bandwidth of a link between the first network device and the second network device and a bandwidth of a link between the first network device and the fifth network device, and e is a bandwidth of a link between the first network device and the fourth network device.

11. The method according to claim 1 or 2, wherein the second network device and the third network device are separately connected to the first network device, the first network device is further connected to a seventh network device, and the method further comprises:
receiving a fifth bandwidth value sent by the seventh network device, wherein the fifth bandwidth value indicates a bandwidth at which the seventh network device sends traffic to the destination prefix, wherein
determining, based on the first bandwidth value and the second bandwidth value, the weights, to the second network device and the third network device respectively, the traffic destined for the destination prefix comprises:
determining, based on the first bandwidth value, the second bandwidth value, and the fifth bandwidth value, weights for sending, to the second network device, the third network device, and the seventh network device respectively, the traffic destined for the destination prefix.

12. The method according to claim 11, wherein determining, based on the first bandwidth value, the second bandwidth value, and the fifth bandwidth value, the weights for sending, to the second network device, the third network device, and the seventh network device respectively, the traffic destined for the destination prefix comprises:
determining that the weight for sending, to the second network device, the traffic destined for the destination prefix is: a ratio of the first bandwidth value to a third total bandwidth, wherein the third total bandwidth is a sum of the first bandwidth value, the second bandwidth value, and the fifth bandwidth value;
determining that the weight for sending, to the third network device, the traffic destined for the destination prefix is: a ratio of the second bandwidth value to the third total bandwidth; and
determining that the weight for sending, to the seventh network device, the traffic destined for the destination prefix is: a ratio of the fifth bandwidth value to the third total bandwidth.

13. The method according to any one of claims 1 to 12, wherein receiving the first bandwidth value sent by the second network device comprises:
receiving an intermediate system to intermediate system IS-IS packet advertised by the second network device, wherein the IS-IS packet comprises the first bandwidth value.

14. The method according to claim 13, wherein the IS-IS packet comprises a prefix type length value TLV, the prefix TLV comprises a first sub-TLV, and the first sub-TLV comprises the first bandwidth value.

15. The method according to any one of claims 1 to 13, wherein receiving the first bandwidth value sent by the second network device comprises:
receiving an open shortest path first OSPF packet advertised by the second network device, wherein the OSPF packet comprises the first bandwidth value.

16. The method according to claim 15, wherein the OSPF packet comprises a prefix type length value TLV, the prefix TLV comprises a second sub-TLV, and the second sub-TLV comprises the first bandwidth value.

17. The method according to any one of claims 1 to 16, wherein the method further comprises:
storing, in a forwarding entry, the weights, to the second network device and the third network device respectively, the traffic destined for the destination prefix.

18. An information processing apparatus, used in a first network device, wherein the apparatus comprises:
a receiving unit, configured to: receive a first bandwidth value sent by a second network device, wherein the first bandwidth value indicates a bandwidth at which the second network device sends traffic to a destination prefix; and receive a second bandwidth value sent by a third network device, wherein the second bandwidth value indicates a bandwidth at which the third network device sends traffic to the destination prefix; and
a processing unit, configured to determine, based on the first bandwidth value and the second bandwidth value, weights, to the second network device and the third network device respectively, for sending traffic destined for the destination prefix.

19. A device, comprising a processor and a memory, wherein
the memory is configured to store instructions or a computer program; and
the processor is configured to execute the instructions or the computer program, to perform the method according to any one of claims 1 to 17.

20. A computer-readable storage medium, comprising instructions or a computer program, wherein when the instructions or the computer program is run on a computer, the computer is caused to perform the method according to any one of claims 1 to 17.

21. A computer program product, comprising a computer program, wherein when the computer program is run on a processor, the method according to any one of claims 1 to 17 is performed.
